Europäisches Patentamt

**European Patent Office**

Office européen des brevets

(19)

(11) Numéro de publication: **0 088 766**

**B1**

(12)

# FASCICULE DE BREVET EUROPEEN

(45) Date de publication du fascicule du brevet: **18.05.88**

(51) Int. Cl.⁴: **H 04 B 7/24**

(21) Numéro de dépôt: **82902452.0**

(22) Date de dépôt: **18.08.82**

(86) Numéro de dépôt international:
**PCT/FR82/00136**

(87) Numéro de publication internationale:
**WO 83/01164 31.03.83 Gazette 83/08**

(54) **PROCEDE DE TELECOMMUNICATION PAR VOIE HERTZIENNE ET DISPOSITIF POUR SA MISE EN OEUVRE.**

(30) Priorité: **16.09.81 FR 8117465**

(43) Date de publication de la demande:
**21.09.83 Bulletin 83/38**

(45) Mention de la délivrance du brevet:
**18.05.88 Bulletin 88/20**

(84) Etats contractants désignés:
**AT BE CH DE GB LI LU NL SE**

(56) Documents cités:
**FR-A-2 203 237**
**GB-A-1 427 737**
**GB-A-1 602 840**

**NEC Research & Development, No. 50, July 1978 (Tokyo, JP) Miyamoto et al., "Radio terminal system" pages 62-68**

(73) Titulaire: **SEINEP RADIOCOMMUNICATIONS**
**3, rue du Four Saint Jacques**
**F - Compiègne (Oise) (FR)**

(72) Inventeur: **KLETZKINE, Richard**
**Tracy le Mont**
**F-60170 Ribecourt (FR)**
Inventeur: **MAKOWSKI, Pierre**
**Belle Fontaine**
**F-60400 Noyon (FR)**

(74) Mandataire: **Bouju, André**
**Cabinet Bouju 38 avenue de la Grande Armée**
**F-75017 Paris (FR)**

(56) References cited:
**COMPCON 80, Twentieth IEEE Computer Society International Conference, 25 to 28 February 1980 (New York, US) Rosen, "PERQ packet stream network" pages 317 to 317A, 29th IEEE Vehicular Technology Conference, 27-30 March 1979 (New York, US) Billstrom, A taxi communication system" pages 307-308**

Courier Press, Leamington Spa, England.

(58) References cited:
**Patents Abstracts of Japan, volume 4, No. 189, 25 December 1980, page 671E39 & JP-A-55132146**

**Patents Abstracts of Japan, volume 4, No. 165, 15 November 1980, page 647E34 & JP-A-55114046**

## Description

La présente invention concerne un dispositif de télécommunication par voie hertzienne en mode simplex ou duplex alterné entre des postes centraux et un certain nombre de postes secondaires, ce dispositif comprenant une prise de raccordement à un émetteur-récepteur hertzien, une prise de raccordement à un ensemble microphone-haut-parleur muni de commandes d'appel et d'alternat, des moyens pour introduire un message à transmettre, des moyens de signalisation d'un message reçu, et une mémoire d'émission pour stocker le message introduit.

Les procédés et dispositifs du genre visé concernent plus précisément les telécommunications par radio-téléphone en mode alterné et sont utilisés principalement pour effectuer des liaisons entre des postes centraux fixes et un certain nombre de postes secondaires situés à bord de véhicules. C'est par exemple le cas d'un réseau de représentants qui doivent transmettre d'urgence des commandes de produits, notamment de products frais, ou encore d'un réseau de véhicules de livraison dont on veut constamment contrôler le circuit. Mais l'invention n'exclut nullement les postes secondaires fixes.

Une des difficultés des liaisons de ce genre tient au fait que le canal d'émission n'est pas toujours libre, ce que oblige l'utilisateur à répéter ses tentatives, engendrant une perte de temps regrettable. La même difficulté se présente si un poste central, qui peut être, par exemple, un ordinateur de gestion, est occupé provisoirement à une autre tâche.

Afin de faciliter le travail de l'opérateur, on a bien proposé des dispositifs dans lesquels le message à transmettre est mis en mémoire mais cela ne modifie pas le problème fondamental de la liberté du canal d'émission.

D'autre part les conditions locales de transmission peuvent être mauvaises, ce qui rend le message inutilisable et oblige l'utilisateur à répéter son émission.

Les mêmes difficultés affectent évidemment les transmissions dans les deux sens.

Le document NEC (MIYAMOTO) décrit un dispositif du type mentionné au début dans lequel les postes secondaires (data transceivers) ne comportant pas de bloc de calcul et les moyens pour tester la liberté du canal hertzien sont extérieurs à ces postes secondaires. Les données de la transmission, notamment l'occupation des canaux, sont traitées par un ordinateur central (Host computer) et l'autorisation de transmettre est relayée par une unité de commande terminale (TCU) à laquelle cet ordinateur est relié, vers les postes secondaires par l'intermédiaire des postes principaux (RBU). En outre, la mémoire d'émission d'après MIYAMOTO permet seulement compte tenu de sa capacité, la mise en attente du message à transmettre.

Le test d'occupation décrit par le document "COMPCON 80" (ROSEN) est en fait une détection de collision entre des paquets de données transmis par des noeuds ("node") appartenant à un réseau maillé du type ETHERNET. Le système de transmission décrit par ROSEN n'enseigne donc pas un test permanent d'occupation des voies de communication.

Le but de la présente invention est de proposer un dispositif du type mentionné au début permettant de remédier aux inconvénients des dispositifs connus.

Suivant l'invention, ce dispositif est caractérisé en ce que les moyens précités sont prévus sur chacun desdits postes centraux et secondaires et et ce que ces moyens comprennent en outre un bloc de calcul incorporé dans chacun desdits postes, relié à l'émetteur-récepteur et à ladite mémoire pour tester en permanence la disponibilité du canal hertzien et pour commander l'émission du message seulement si le canal est libre.

Selon la présente invention, le traitement des données est local (un bloc de calcul par poste secondaire portatif ou principal), ledit bloc de calcul déclenchant automatiquement la transmission du contenu de la mémoire d'émission lorsqu'il a reçu l'information de canal libre.

Le fonctionnement des postes émetteur-récepteur conformes à l'invention n'est assujetti à aucune structure informatique ou électronique fixe préétablie, ce qui ne limite pas leur utilisation.

Par ailleurs, la caractéristique selon laquelle l'échange des messages se fait en mode simplex ou duplex alterné renforce l'adéquation du dispositif conforme à l'invention à être utilisé dans les nombreux réseaux de télécommunication phonique qui utilisent couramment ce mode de transmission.

Suivant une forme de réalisation avantageuse de l'invention, le dispositif précité est caractérisé en ce qu'il comprend des moyens pour mesurer le temps de séjour de chaque message introduit dans la mémoire d'émission et pour adjoindre à ces messages au moment de leur émission une donnée représentant le temps écoulé depuis leur introduction dans la mémoire d'émission.

Cette caractéristique peut s'avérer particulièrement avantageuse lorsqu'il est nécessaire de transmettre des rapports d'intervention indiquant le moment précis auquel chaque étape de cet intervention s'est déroulée (par exemple intervention d'une compagnie de sapeurs pompiers sur un feu).

D'autres particularités et avantages de l'invention ressortiront encore de la description détallée qui va suivre.

Aux dessins annexés, donnés à titre d'exemple non limitatif:

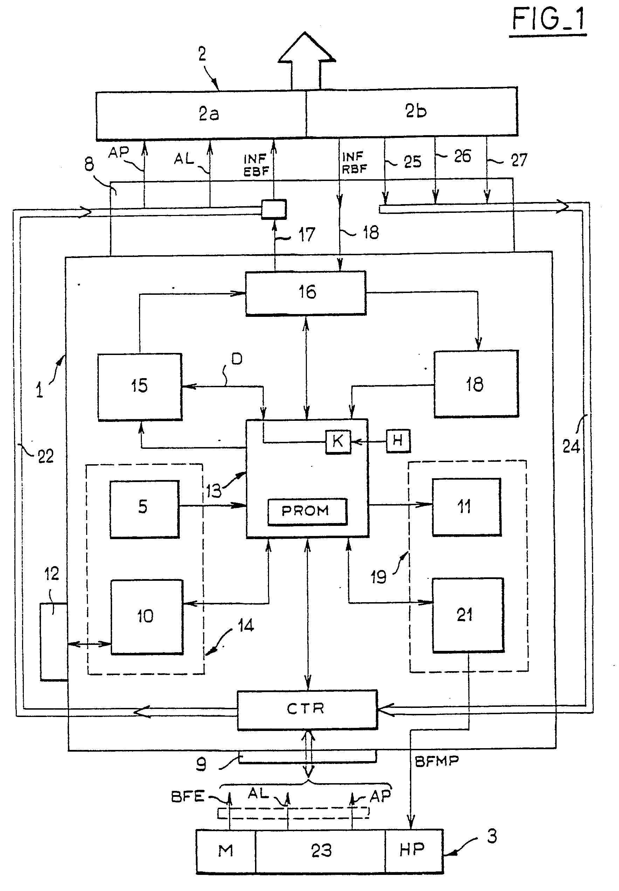

. la figure 1 est un schéma électrique par blocs d'un dispositif conforme à l'invention;

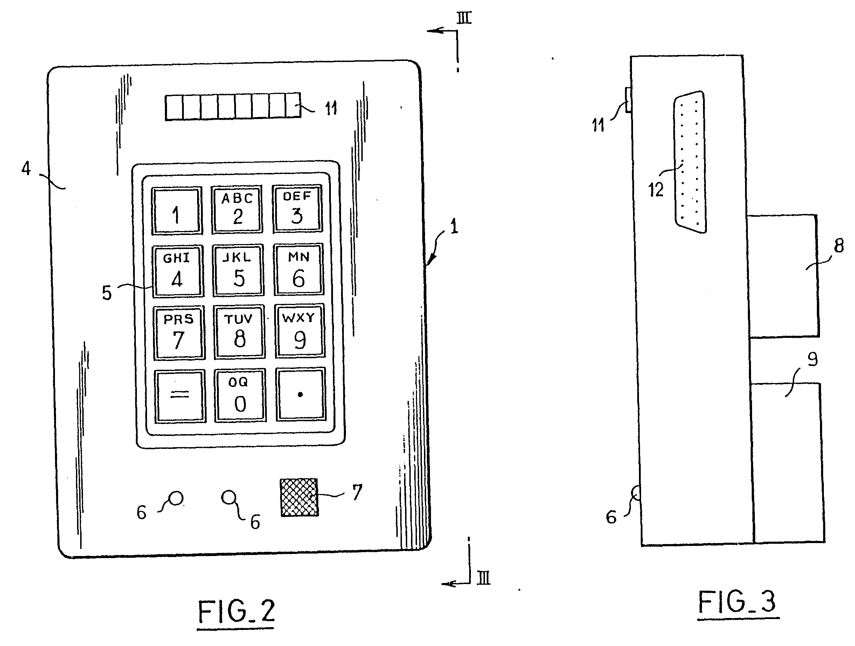

. la figure 2 est une vue de face de ce dispositif;

. la figure 3 est une vue suivant III—III de la figure 2;

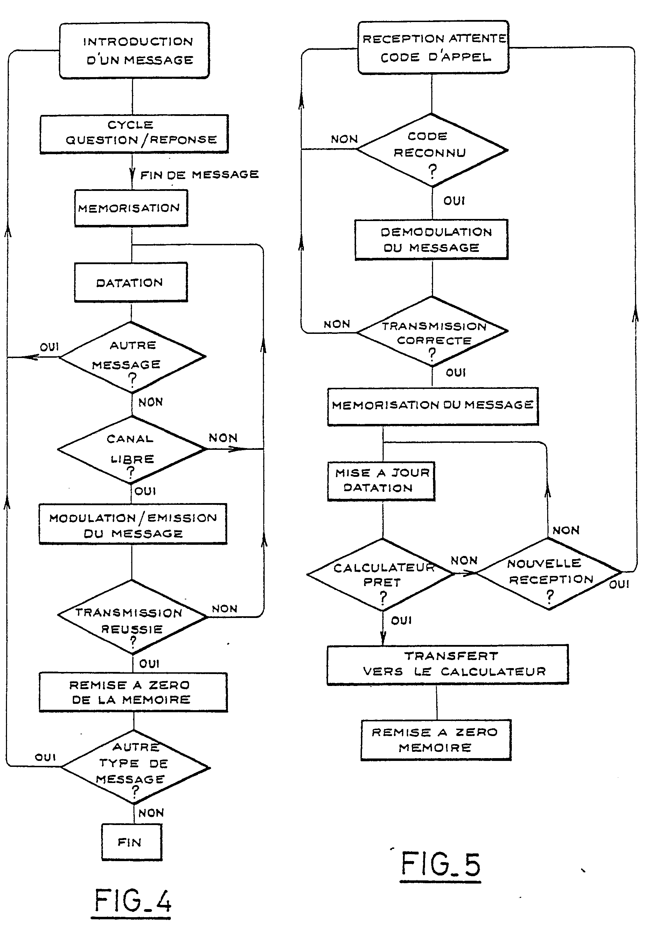

. les figures 4 à 14 représentent schématiquement des séquences opératoires, en vue de l'explication du procédé.

En référence aux figures 1 à 3, le dispositif 1 conforme à l'invention est inséré entre un étage émetteur-récepteur 2 et un ensemble microphone-haut-parleur 3.

Le dispositif proprement dit est contenu dans un boîtier 4 (figure 2) laissant apparaître en façade un clavier 5 du type téléphonique, des voyants d'alarme 6 et un organe 7 d'appel sonore. Des prises de raccordement 8, 9 sont prévues à l'arrière (figure 3) en vue de la connexion, respectivement, à l'émetteur-récepteur et à l'ensemble microphone-haut-parleur.

L'appareil présente encore en façade un afficheur alphanumérique lumineux 11 et, sur le côté, un connecteur 12 dont le rôle sera décrit plus loin.

En référence plus précisément à la figure 1, le dispositif 1 comprend un micro-processeur 13 contenant une mémoire de programme PROM et relié d'une part à un étage 14 d'introduction de données et d'autre part à une mémoire d'émission 15.

L'étage 14 d'introduction de données comprend le clavier 5 et un convertisseur analogique-numérique 10 relié au connecteur 12 pour liaison avec une sonde de mesure extérieure.

La mémoire 15 est reliée, par l'intermédiaire d'un modulateur-démodulateur (MODEM) 16 et de la prise 8, à l'émetteur 2a, par une ligne 17 d'information émise en basse fréquence (INFEBF).

De façon analogue, une mémoire de réception 18 est reliée au récepteur 2b par une ligne 18 d'information reçue en basse fréquence (INFEBF), par l'intermédiaire du MODEM 16. Cette mémoire est également reliée à un étage 19 de signalisation de message reçu par l'intermédiaire du micro-processeur 13.

L'étage 19 comprend, outre l'afficheur 11 un synthétiseur vocal 21 relié en sortie par une ligne BFHP au haut-parleur HP qui fait partie de l'ensemble 3.

Cet ensemble 3 comprend un microphone M d'où part une ligne BFE d'émission en basse fréquence. Cette ligne rejoint la ligne 17 aboutissant à l'émetteur 2a par l'intermédiaire de la prise 9, d'un bloc de contrôle CTR et d'un câble multifilaire 22, pour rejoindre la ligne 17 d'information en basse fréquence.

L'ensemble 3 comprend encore un bloc de commande 23 d'où partent des liaisons d'appel AP et d'alternat AL qui aboutissent, par la même voie, à l'émetteur 2a.

Le bloc de contrôle CTR, qui est dans une liaison de dépendance réciproque avec le micro-processeur 13, reçoit par un câble multifilaire 24 des informations de service issues du récepteur 2b, à savoir une information 25 de code reçu, une information 26 de canal libre et une information 27 signalant la présence d'un message en basse fréquence destiné au haut-parleur.

Le micro-processeur 13 comprend encore un compteur K qui compte les impulsions d'une horloge H et est relié à la mémoire d'émission 15 par une liaison de datation D.

Supposant que le dispositif qui vient d'être décrit est installé sur un poste secondaire l'utilisateur entre un message par le clavier 5 et, via le micro-processeur 13, ce message est mémorisé dans la mémoire d'émission 15, et daté. Dès que l'information 26 de canal libre est transmise au micro-processeur par l'intermédiaire du bloc de contrôle CTR, le contenu de la mémoire est transmis par la ligne 17 et l'émetteur 2a, avec adjonction d'une information représentant la durée de séjour dans la mémoire 15, cette information correspondant au contenu du compteur K.

Dans un autre mode de fonctionnement, des informations analogiques provenant d'une sonde de mesure connectée au connecteur 12 sont converties en numérique dans le convertisseur 10 et transmises sur ordre du microprocesseur après une éventuelle attente en mémoire.

A chaque instant, l'utilisateur peut intervenir en phonie au moyen de la commande 23 d'appel et d'alternat.

Les informations transmises par un poste central sont visualisées sur l'afficheur 11 ou communiquées en phonie par le haut-parleur HP par l'intermédiaire du synthétiseur 21.

Dans le cas où le dispositif est installé à un poste central, il n'est pratiquement pas modifié, sauf certains détails de programmation du micro-processeur. L'étage de signalisation 19 est alors relié à un étage récepteur final qui peut se trouver occupé au moment d'une transmission, de sorte que la mémoire de réception 18 joue un rôle important. Quand le message est finalement transmis à cet étage, le temps de séjour dans la mémoire 18 est ajouté au temps de séjour dans la mémoire d'émission du poste secondaire qui a envoyé le message.

On va maintenant dérire plus en détail, en référence aux figures 4 à 14, les séquences opératoires de manière à donner une description plus complète du procédé et à préciser la programmation du micro-processeur.

On envisage les deux modes de fonctionnement possibles suivant le poste que prend l'initiative de la transmission.

A. A partir d'un poste secondaire

Les opérations relatives au poste secondaire sont résumées sur la figure 4.

L'opération initiale est l'entrée d'un message qui, normalement s'effectue par voie de questions programmées auxquelles répond l'utilisateur. Une fois le message entré, il est mis en mémoire et daté suivant des sous-séquences qui seront décrites plus loin en détail.

S'il y a d'autres messages à introduire suivant le même cycle de questions-réponses, on revient au début, sinon on tente de transmettre dans la mesure où le canal hertzien est libre. Tant que le canal n'est pas libre, on revient mettre à jour la datation.

On émet suivant une procédure qui sera décrite plus loin en détail. En cas de transmission défectueuse, on revient à la datation.

Après émission, on efface le message de la mémoire et l'on passe éventuellement à un autre type de message, justiciable d'une procédure question-réponse différente.

Le fonctionnement correspondant d'un poste central (figure 5) consiste à reconnaître son code d'appel, à démoduler le message et à le mémoriser dès lors que la transmission est reconnue correcte. On met à jour la datation en ajoutant le temps de séjour dans la mémoire de réception et, dès que le calculateur récepteur final est disponible, on y transfère le message et l'on efface la mémoire.

Si le calculateur n'est pas disponible, on repasse à la datation, à moins qu'on nouveau message ne se présente pour être démodulé et mémoirisé.

B. A partir d'un poste central.

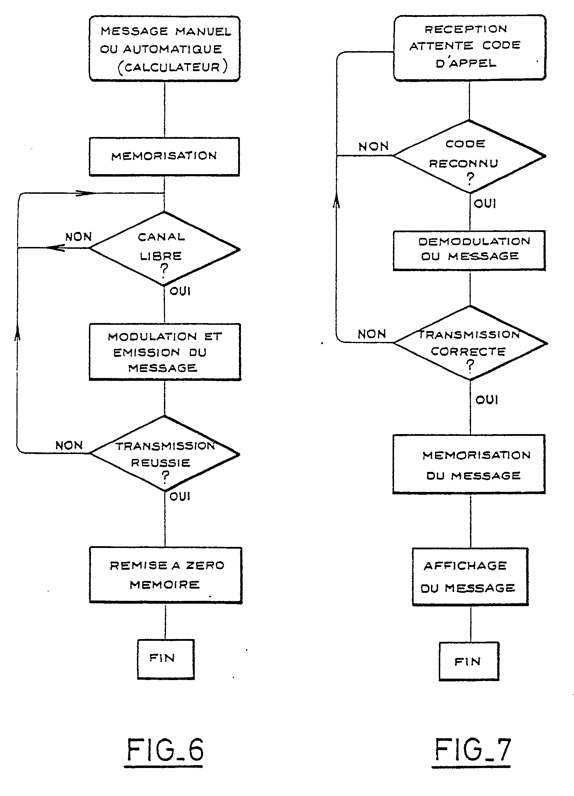

Un message entré manuellement ou automatiquement à un poste central (figure 6) est d'abord mémorisé puis transmis dès que le canal est libre. Après contrôle d'une transmission correcte, la mémoire est remise à zéro.

En correspondance (figure 7), le poste secondaire reconnaît son code d'appel et démodule le message qui n'est mis en mémoire qu'après vérification de transmission correcte.

Le message est ensuite affiché sur l'afficheur 11.

Normalement, il n'est pas prévu ici de datation, le temps réel des instructions émises par un poste central étant a priori sans intérêt.

C. Sous-séquences.

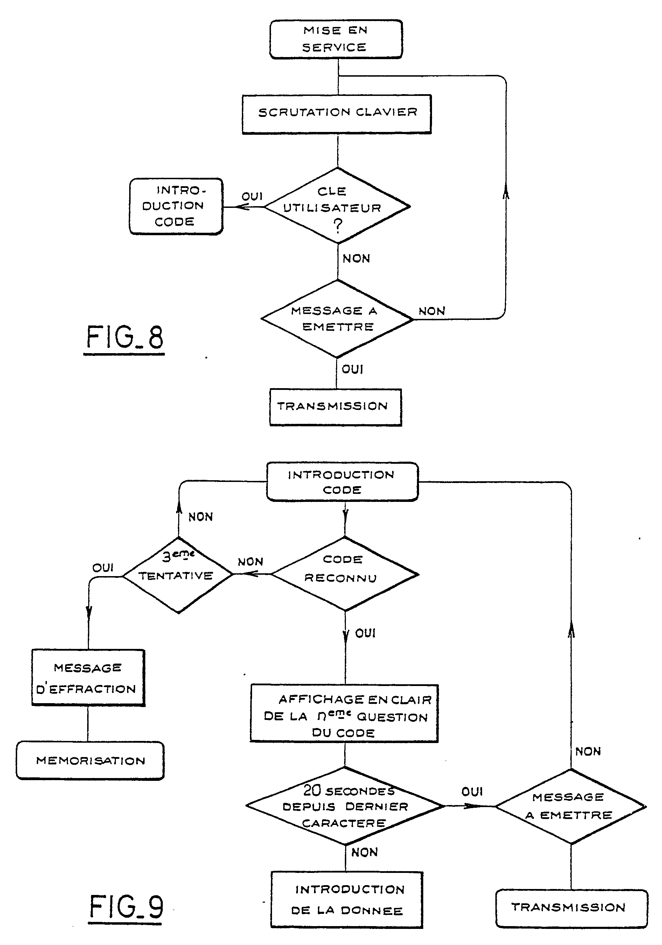

L'opération initiale (figure 8), décrite ici en référence au poste secondaire, consiste à mettre l'appareil en service, ce que provoque la scrutation du clavier. L'utilisateur doit alors introduire sa clef personnelle. Sinon, l'appareil se contentera de transmettre le message (ou les messages) qui restaient éventuellement stockés dans la mémoire d'émission.

Ensuite l'utilisateur entre un code définissant un cycle questions-réponses.

L'introduction du code est détaillée sur la figure 9. Si le code est erroné, après trois tentatives, un message d'effraction est émis.

Une fois le code reconnu, les questions s'affichent successivement et l'utilisateur y répond par l'introduction des données. Une interruption de 20 secondes dans la frappe des données provoque la mise de l'appareil en état de transmission, et les données sont annulées.

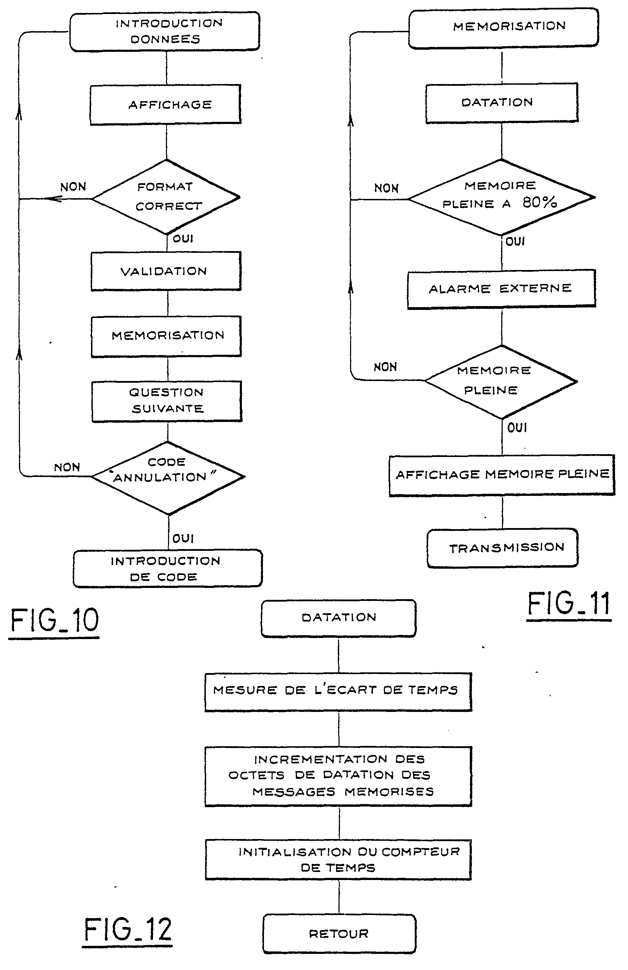

Le détail de l'introduction des données est représenté sur la figure 10. Les données frappées sont affichées et vérifiées dans leur format. Elles doivent être validées par pression d'un bouton. Puis elles sont mémorisées et l'on passe à la question suivante. Une pression sur un bouton "annulation" permet de passer à un cycle différent de questions-réponses matérialisé par un autre code à introduire.

L'opération de mise en mémoire est détaillée sur la figure 11. Cette opération comporte une datation qui fait démarrer un comptage de temps relatif au message qui vient d'être introduit et qui remet à jour les datations des messages mémorisés antérieurement et non encore transmis (figure 12). Cette remise à jour générale des dates s'effectue non seulement à la mémorisation d'un nouveau message mais également à chaque transmission.

Chaque message mémorisé contient:
. son code;
. la question (ou les questions);
. les données;
. la datation;
. l'identification du poste;
. la longueur du message.

L'utilisateur est informé de l'état de remplissage de la mémoire. Quand celle-ci est pleine, le dispositif passe obligatoirement en transmission.

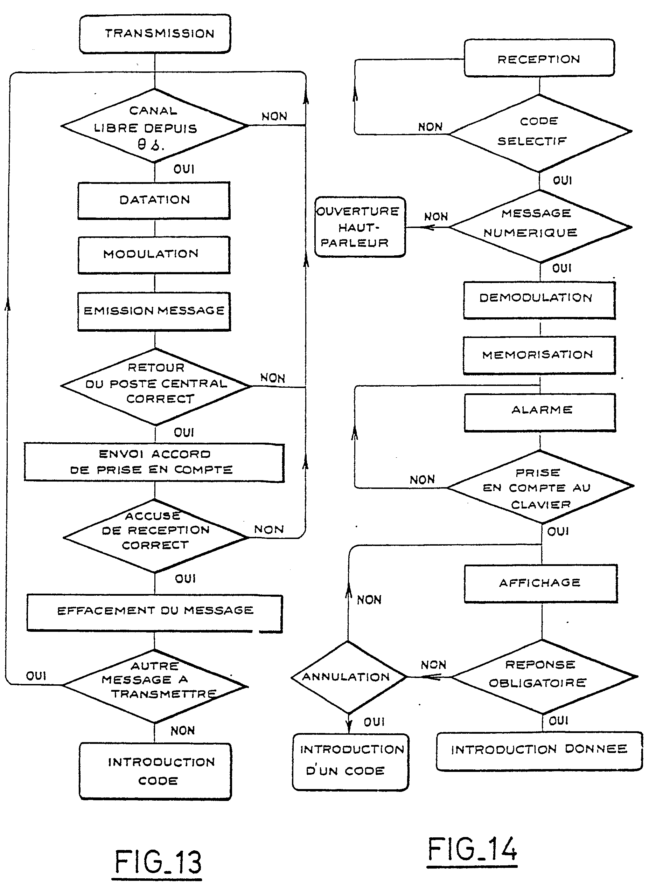

On va maintenant décrire en détail, en référence aux figures 13 et 14 la séquence des opérations de transmission à partir d'un poste secondaire et celle des opérations de réception par ce même poste secondaire.

Avant chaque transmission, on attend un certain temps θ, différent pour chaque poste secondaire de manière à définir une échelle de priorité entre ces postes. Ensuite, on met à jour définitivement la datation en ce qui concerne le temps d'attente du message au poste secondaire.

Après modulation et émission, le poste central répète le message. Si ce retour est correct, on envoie un accord pour que le message soit validé au niveau du récepteur final. Si cet accord est lui-même correct, on efface le message de la mémoire d'émission et l'on passe au message suivant. L'ensemble des données en mémoire est en effet sécable et il est préférable d'émettre par fraction en raison du caractère aléatoire des incidents hertziens.

En fin d'émission, on repasse en position d'introduction de code.

La réception d'un message par le poste secondaire (figure 14) comprend d'abord la reconnaissance du code personnel de ce poste, puis la reconnaissance de la nature du message (numérique ou phonique). Le message numérique est démodulé et mémorisé dans la mémoire de réception. Son arrivée est annoncée par un signal sonore.

L'utilisateur demande alors l'affichage en actionnant le clavier. Si une réponse est obligatoire, on passe en position d'introduction de données. Sinon, le message reste affiché jusqu'à actionnement du bouton d'annulation.

Comme exemple d'utilisation de l'invention, on peut citer celui de l'exploitation d'une centrale à béton. Les mouvements des camions sont fréquents et les incidents peuvent être nombreux. Les divers changements d'état sont communiqués manuellement par le chauffeur, ou automatiquement par des sondes analogiques (par exemple la consommation d'essence du camion). La centrale est ainsi en mesure de connaître à chaque instant l'état de chaque véhicule, et l'avancement de chaque chantier. Elle peut alors optimiser sa production et accélérer la facturation. Et ces avantages sont obtenus avec une perte de temps minimale pour le livreur. Dans cet exemple d'application, la présence du synthétiseur vocal au poste secondaire est d'une grande utilité.

Un autre exemple est celui de la distribution de produits frais, dans laquelle la rapidité de transmission est primordiale à partir d'un réseau de représentants itinérants. Outre les commandes émises par le poste secondaire le poste central peut envoyer rapidement des messages tels que des débuts ou des fins de promotion commerciale, ou une rupture de stock. En outre, par la numérisation, la discrétion est assurée.

On peut encore citer l'exemple de la gestion d'un réseau de taxis.

Bien entendu, l'invention n'est pas limitée aux exemples décrits mais couvre toute variante à la portée de l'homme de l'art.

Ainsi, le convertisseur 10 pourrait être à double sens de transfert des informations, par exemple pour exercer une commande analogique sur un organe extérieur. Il pourrait également être conçu pour jouer le rôle d'un interface transparent en vue de recevoir, par le prise 12, des informations "série" déjà sous forme numérique.

## Revendications

1. Dispositif de télécommunication par voie hertzienne en mode simplex ou duplex alterné entre des postes centraux et un certain nombre de postes secondaires, ce dispositif comprenant une prise (8) de raccordement à un émetteur-récepteur hertzien (2), une prise (9) de raccordement à un ensemble microphone-haut-parleur muni de commandes (23) d'appel et d'alternat, des moyens (14) pour introduire un message à transmettre, des moyens (19) de signalisation d'un message reçu, et une mémoire d'émission (15) pour stocker le message introduit, caractérisé en ce que les moyens précités sont prévus sur chacun desdits postes centraux et secondaires et en ce que ces moyens comprennent en outre un bloc de calcul (13) incorporé dans chacun desdits postes, relié à l'émetteur-récepteur (2) et à ladite mémoire pour tester en permanence la disponibilité du canal hertzien et pour commander l'émission du message seulement si le canal est libre.

2. Dispositif conforme à la revendication 1, caractérisé en ce qu'il comprend une mémoire de réception (18) reliée au récepteur (2b) et aux moyens de signalisation (19) pour stocker les messages reçus.

3. Dispositif conforme à l'une des revendications 1 ou 2, caractérisé en ce qu'il comprend des moyens (D, H, K) pour mesurer le temps de séjour de chaque message introduit dans la mémoire d'émission (15) et pour adjoindre à ces messages au moment de leur émission une donnée représentant le temps écoulé depuis leur introduction dans la mémoire d'émission (15).

4. Dispositif conforme à l'une des revendications 1 à 3, caractérisé en de que les moyens (14) pour introduire un message comprennent un clavier manuel (5).

5. Dispositif conforme à l'une des revendications 1 à 4, caractérisé en ce que les moyens (14) pour introduire un message comprennent un convertisseur (10) rélié à un connecteur (12) de raccordement à un organe extérieur d'information et/ou de commande.

6. Dispositif conforme à l'une des revendications 1 à 5, caractérisé en ce que les moyens (19) de signalisation d'un message reçu comprennent un afficheur (11) de signalisation.

7. Dispositif conforme à l'une des revendications 1 à 6, caractérisé en ce que les moyens (19) de signalisation d'un message reçu comprennent un synthétiseur vocal (21) relié au haut-parleur (HP).

## Patentansprüche

1. Vorrichtung zur Nachrichtenvermittlung über Funk im abwechselnden Simplex- oder Duplexbetrieb zwischen Zentralstationen und einer bestimmten Anzahl von Nebenstationen, wobei diese Vorrichtung einen Anschluß (8) zur Verbindung mit einem Funk-Sende/Empfänger (2), einen Anschluß (9) zur Verbindung mit einer Mikrophon/Lautsprecher-Einheit, die mit Ruf- und Wechsel-Steuerorganen (23) versehen ist, Mittel (14) zum Eingeben einer zu übertragenden Nachricht, Mittel (19) zum Signalisieren einer empfangenen Nachricht und einen Sendespeicher (15) zum Speichern der eingegebenen Nachricht enthält, dadurch gekennzeichnet, daß die oben aufgeführten Mittel an jeder Zentral- und Nebenstation vorgesehen sind, diese Mittel außerdem eine Recheneinheit (13) enthalten, die in jeder dieser oben genannten Stationen angeordnet ist und die mit dem Sende/Empfänger (2) und mit dem Speicher verbunden ist, um die Verfügbarkeit des Funkkanals fortwährend zu überprüfen und die Aussendung der Nachricht erste dann auszulösen, wenn der Kanal frei ist.

2. Vorrichtung nach Anspruch 1, dadurch gekennzeichnet, daß sie einen Empfangsspeicher (18) umfaßt, der mit dem Empfänger (2b) und mit den Signalisiermitteln (19) zum Speichern der empfangenen Nachrichten verbunden ist.

3. Vorrichtung nach einem der Ansprüche 1 und 2, dadurch gekennzeichnet, daß sie Mittel (D, H, K) umfaßt, um die Verweilzeit der in den Sendespeicher (15) eingegebenen Nachricht zu messen und um zum Zeitpunkt des Sendens diesen Nachrichten eine Dateneinheit hinzuzufügen, welche die Zeit darstellt, die seit ihrer Eingabe in den Sendespeicher (15) verstrichen ist.

4. Vorrichtung nach einem der Ansprüche 1 bis 3, dadurch gekennzeichnet, daß die Mittel (14) zur Eingabe einer Nachricht eine Handtastatur (5) umfassen.

5. Vorrichtung nach einem der Ansprüche 1 bis 4, dadurch gekennzeichnet, daß die Mittel (14) zur Eingabe einer Nachricht einen Umsetzer (10) umfassen, der mit einem Verbinder (12) zum Anschließen an ein äußeres Informations- und/oder Steuerorgan verbunden ist.

6. Vorrichtung nach einem der Ansprüche 1 bis 5, dadurch gekennzeichnet, daß die Mittel (19) zum Signalisieren einer empfangenen Nachricht eine Signalisier-Anzeigeeinheit (11) umfassen.

7. Vorrichtung nach einem der Ansprüche 1 bis 6, dadurch gekennzeichnet, daß die Mittel (19) zum Signalisieren einer empfangenen Nachricht eine mit einem Lautsprecher (HP) verbundene Sprachsyntheseeinheit (21) umfassen.

**Claims**

1. Device for radio telecommunication in the simplex mode or in the alternate duplex mode between central stations and a certain number of secondary stations, this device comprising a socket outlet (8) for connection to a radio transmitter-receiver (2), a socket outlet (9) for connection to a microphone-loudspeaker assembly provided with controls (23) for calling and alternate transmission, means (14) for introducing a message to be transmitted, means (19) for signalling a message received, and a transmission memory (15) for storing the message introduced, characterized in that the means aforesaid are provided on each of said central and secondary stations and that these means further comprise a computing unit (13) incorporated in each station aforesaid, connected to the transmitter-receiver (2) and to said memory for continuously testing the availability of the radio channel and for initiating transmission of the message only if the channel is free.

2. Device in accordance with claim 1, characterized in that it comprises a reception memory (18) connected to the receiver (2b) and to the signalling means (19) for storing the messages received.

3. Device in accordance with either of claims 1 or 2, characterized in that it comprises means (D, H, K) for measuring the time of residence of each message introduced in the transmission memory (15) and for adding to these messages at the moment of transmission a datum representing the time which has elapsed since their introduction into the transmission memory (15).

4. Device in accordance with any one of claims 1 to 3, characterized in that the means (14) for introducing a message comprise a manual keyboard (5).

5. Device in accordance with any one of claims 1 to 4, characterized in that the means (14) for introducing a message comprise a converter (10) connected to a connector (12) for connecting to an external information and/or control element.

6. Device in accordance with any one of claims 1 to 5, characterized in that the means (19) for signalling a message received comprise a signalling display device (11).

7. Device in accordance with any one of claims 1 to 6, characterized in that the means (19) for signalling a message received comprise a voice synthesizer (21) connected to the loudspeaker (HP).

0 088 766

FIG_1

0 088 766

III

ABC
2

DEF
3

GHI
4

JKL
5

MN
6

PRS
7

TUV
8

WXY
9

OQ
0

1

=

.

11

4

1

5

6

6

7

III

__FIG.2__

11

12

8

9

6

__FIG.3__

## FIG_4

```
        ┌──────────────────────┐
        │    INTRODUCTION       │
        │   D'UN MESSAGE        │
        └──────────────────────┘
                  │
        ┌──────────────────────┐
        │      CYCLE            │
        │  QUESTION/REPONSE     │
        └──────────────────────┘
                  │  FIN DE MESSAGE
        ┌──────────────────────┐
        │    MEMORISATION       │
        └──────────────────────┘
                  │
        ┌──────────────────────┐
        │      DATATION         │
        └──────────────────────┘
                  │
              ╱ AUTRE ╲   OUI
             ╱ MESSAGE ╲ ──────►
             ╲    ?    ╱
              ╲       ╱
                 │ NON
              ╱ CANAL ╲   NON
             ╱  LIBRE  ╲ ──────►
             ╲    ?    ╱
              ╲       ╱
                 │ OUI
        ┌──────────────────────┐
        │  MODULATION/EMISSION  │
        │    DU MESSAGE         │
        └──────────────────────┘
                  │
            ╱ TRANSMISSION ╲  NON
           ╱    REUSSIE     ╲ ──────►
           ╲       ?        ╱
            ╲              ╱
                  │ OUI
        ┌──────────────────────┐
        │   REMISE A ZERO       │
        │   DE LA MEMOIRE       │
        └──────────────────────┘
                  │
          OUI  ╱ AUTRE  ╲
        ◄──── ╱ TYPE DE  ╲
              ╲ MESSAGE   ╱
               ╲    ?    ╱
                  │ NON
              ┌───────┐
              │  FIN  │
              └───────┘
```

## FIG_5

```
        ┌──────────────────────┐
        │  RECEPTION ATTENTE    │
        │   CODE D'APPEL        │
        └──────────────────────┘
                  │
      NON      ╱ CODE  ╲
        ◄──── ╱ RECONNU ╲
              ╲    ?    ╱
                  │ OUI
        ┌──────────────────────┐
        │   DEMODULATION        │
        │    DU MESSAGE         │
        └──────────────────────┘
                  │
      NON    ╱ TRANSMISSION ╲
        ◄─── ╱   CORRECTE    ╲
             ╲      ?        ╱
                  │ OUI
        ┌──────────────────────┐
        │ MEMORISATION DU MESSAGE│
        └──────────────────────┘
                  │
        ┌──────────────────────┐
        │   MISE A JOUR         │
        │    DATATION           │
        └──────────────────────┘
                  │
          ╱ CALCULATEUR ╲ NON  ╱ NOUVELLE ╲ NON
         ╱    PRET       ╲──── ╱ RECEPTION ╲────►
         ╲      ?        ╱     ╲     ?     ╱
                  │ OUI              │ OUI
        ┌──────────────────────┐
        │     TRANSFERT         │
        │  VERS LE CALCULATEUR  │
        └──────────────────────┘
                  │
        ┌──────────────────────┐
        │   REMISE A ZERO       │
        │    MEMOIRE            │
        └──────────────────────┘
```

3

0 088 766

FIG_6

FIG_7

4

FIG_8

FIG_9

FIG_10

FIG_11

FIG_12

FIG_13

FIG_14